# EUROPÄISCHE PATENTSCHRIFT

(11) **EP 0 457 158 B1**
(45) Veröffentlichungstag und Bekanntmachung des Hinweises auf die Patenterteilung: **25.01.1995**
(21) Anmeldenummer: 91107393.0
(22) Anmeldetag: 07.05.1991
(51) Int. Cl.: B65G 1/137

(54) **Kommissioniervorrichtung für Artikel**
Device for order picking of articles
Dispositif pour rassembler et préparer des articles

(30) Priorität: 17.05.1990 DE 4015935
(43) Veröffentlichungstag der Anmeldung: 21.11.1991
(73) Patentinhaber: Christ, Ferdinand, D-67808 Weitersweiler (DE)
(72) Erfinder: Christ, Ferdinand, D-67808 Weitersweiler (DE)
(74) Vertreter: Melzer, Wolfgang, Dipl.-Ing.

(56) Entgegenhaltungen:
- EP-A- 0 183 074
- DE-A- 1 431 582
- DE-A- 2 736 197
- DE-A- 3 412 025
- US-A- 4 527 937
- INDUSTRIE-ANZEIGER Bd. 95, Nr. 40, 11. Mai 1973, Leinfelden-Echterdingen (DE), S. 824 - 826; W. FÜRWENTSCHES: "Möglichkeiten automatischer Kommissioniersysteme"

## Beschreibung

Die Erfindung betrifft eine Kommissioniervorrichtung für Artikel gemäß dem Oberbegriff des Anspruches 1.

Insbesondere im Versandhandel, vor allem im Großversandhandel, sind kundenspezifische Bestell-Kommissionen aus einem u.U. sehr umfangreichen Vorrat an verschiedenen Artikeln zusammenzustellen. In der Praxis werden mittels Handarbeit aus ortsfesten Regalen, die Artikel gleicher Art aufnehmen, diese entsprechend der jeweiligen Bestellkommission entnommen und auf einen umlaufenden regalartigen Behälter abgelegt, der jeweils einer bestimmten Kommission zugeordnet ist. Nach Fertigstellung und Prüfung der Kommission erfolgt eine Verpackung von Hand und ein anschließender Versand. Die ortsfesten Regale für die Artikel müssen auf ihren Bestand überprüft werden und müssen nachgefüllt werden. Zu diesem Zweck werden die Artikel von einem angelieferten und in einem Wareneingang überprüften Gebinde vereinzelt und über ein Fördersystem zu den Regalen gebracht und dort von Hand umgelagert. Diese Vorgehensweise ist nicht nur umständlich und zeit- sowie platzraubend, sondern auch fehlerbehaftet. Durch die Handarbeit können falsche Artikel entnommen werden oder können falsche Artikel in eines der ortsfesten Regale abgelegt werden. Insbesondere kann es vorkommen, daß das Nachfüllen von Regalen übersehen wird und die gleichwohl über die Fördereinrichtung zugeführten Artikel zu einem Überlauf weitergeleitet werden, in dem sie verbleiben, bis, ebenfalls von Hand, der Überlauf aufgelöst wird. Da das ortsfeste Regal weiterhin einen Mangel an dem jeweiligen Artikel hat, kann dies dazu führen, daß weitere Artikel am Wareneingang bzw. einem diesem zugeordneten Regallager abgefordert werden und ggf. sogar eine entsprechende Nachbestellung aufgegeben wird, obgleich eine ausreichende Menge an Artikeln an sich vorhanden ist. Die in der Praxis durchgeführte Vorgehensweise ist daher auch aus wirtschaftlichen Gründen nachteilig. Aus wirtschaftlichen Gründen ist es nämlich erwünscht, die Verweildauer von dem Versandhandelsunternehmen zugeführten Artikeln bis zu deren kundenspezifischer Abgabe als Kommission möglichst kurzzuhalten und trotzdem alle ankommenden kundenspezifischen Bestell- Kommissionen so schnell wie möglich und vollständig erledigen zu können. Hier ist ein 24-Stunden-Service erwünscht.

Als erster Schritt hierzu sind rechnergesteuerte automatische Kommissionieranlagen angegeben worden. Eine solche ist beispielsweise in der EP-A-183 074 angegeben. Diese bekannte Kommissionieranlage weist in Zeilen und Spalten angeordnete schachtartige von einem Zulaufende zu einem Auslaufende geneigte Vorratsbehälter auf. Am Auslaufende ist eine Abgabevorrichtung mit Zähleinrichtung vorgesehen. Die verschiedenen Vorratsbehälter werden mit den jeweiligen in den Vorratsbehältern zwischenzuspeichernden Artikeln von Hand nachgefüllt, insbesondere dann, wenn durch eine Alarmanzeige das Unterschreiten eines Mindestinhalts angezeigt ist. Ein Rechner steuert die Abgabevorrichtung jedes Vorratsbehälters abhängig von dem Vorliegen eines bestimmten kundenspezifischen Kommissionsauftrages so an, daß zu einem vorgegebenen Zeitpunkt vom Auslaufende einer oder mehrere der Artikel auf eine Ausgangsfördereinrichtung wie ein Förderband abgegeben wird/werden. Die Abgabe erfolgt zu einem vom Rechner bestimmten Zeitpunkt derart, daß die unterschiedlichen Artikel einer Kommission zu einem Haufen zusammengestellt am Ausgangsende dieser Ausgangsfördereinrichtung auftreten und entsprechend verpackt werden können. Beim Verpacken ist eine Prüfung auf Vollständigkeit erforderlich, da nicht sichergestellt ist, daß die jeweiligen Vorratsbehälter auch tatsächlich nachgefüllt worden sind. Ferner können die bereits geschilderten Nachteile bei der Versorgung eines solchen Kommissionierautomaten auftreten. Diese Nachteile treten auch dann auf, wenn der Rechner nicht nur am jeweiligen Vorratsbehälter ein Alarmsignal abgibt, sondern auch an eine die Artikel zuliefernde Einrichtung.

Es besteht daher der Wunsch nach einer möglichst automatisierten Vorgehensweise.

Dabei ist zu berücksichtigen, daß viele Artikel von einem Lieferanten nur in Form von Gebinden oder Großgebinden angeliefert werden. Ferner ist zu berücksichtigen, daß zwar eine Reihe der Artikel sehr häufig angefordert wird, daß es jedoch wiederum eine Reihe von Artikeln gibt, die äußerst selten angefordert werden, wobei sich dies im Laufe der Zeit, z. B. aus saisonalen Gründen ändern kann.

Die vorliegende Erfindung geht von einer Kommissioniervorrichtung aus, wie sie aus der Zeitschrift "Fordern und Heben", 1969, Nr. 12, S. 730 - 732, bekannt ist. Dort wird ein ausführlicher Überblick über den Stand der Technik auf dem Gebiet der Warenverteilung (von einem ankommenden Gebinde, Wareneingang, Produktion oder dgl.) und der Aufragzusammenstellung oder Kommisionierung gegeben. Im Kapitel Durchlauflager ist eine Kommissioniervorrichtung mit den Merkmalen des Oberbegriffes des Anspruches 1 dargestellt, wobei vorausgesetzt ist, daß einem solchen Durchlauflager im gegebenen Fall eine Zuführeinrichtung zugeordnet ist. Ersichtlich sind die schachtartige Regalabschnitte der bekannten Kommissioniervorrichtung allenfalls in einer Vertikalebene senkrecht zur Eingangs-Fördereinrichtung und zur Ausgangs-Fördereinrichtung geneigt angeordnet, um zur Förderung innerhalb der Regalabschnitte die Schwerkraft ausnutzen zu können. Offensichtlich nachteilig bei dem bekannten Durchlauflager ist jedoch, daß die Gefahr besteht, daß die einzelnen Artikel verklemmen können, was einer einfachen und platzsparenden sowie schnellen und sicheren Durchführung der Kommissionierung entgegensteht.

Es ist daher die Aufgabe der Erfindung, ein Verfahren und eine Vorrichtung zur Kommissionierung von Artikeln anzugeben, die auf einfache und platzsparende Weise eine schnelle und sichere Durchführung der Kommissionierung bei nur kurzer Verweildauer der zu kommissionierenden Artikel ermöglicht.

Die Aufgabe wird durch die Merkmale des Anspruchs 1 gelöst.

Die Erfindung wird durch die Merkmale der Unteransprüche weitergebildet.

Die Erfindung geht dabei zum einen von der Erkenntnis aus, daß die Gefahr eines Verklemmens vollständig beseitigt werden kann, wenn die Artikel während aller Förderbewegungen eine bevorzugte Ausrichtung beibehalten. Dazu ist ferner die Erkenntnis erforderlich, die Regalabschnitte des Durchlauflagers nicht als Speicher anzusehen, in denen die Artikel im wesentlichen statisch verbleiben, sondern als Teil einer gesamten Förderanlage anzusehen, selbst wenn die dort geförderten Artikel unter Umständen nur mit langsamer Fördergeschwindigkeit gefördert werden. Darüberhinaus ist von der Erkenntnis auszugehen, daß in Kenntnis aller mechanischer Vorgänge und in Kenntnis aller an einem Wareneingang eingetroffener Artikel der Flußweg jedes Artikels vom Wareneingang bis zur Verpackung bzw. bis zum Versand genau vorherbestimmbar ist, weshalb auf das Vorsehen von Überlaufbereichen vollständig verzichtet werden kann. Dabei können bei der Vorrichtung handelsübliche Teile sowohl für Regale als auch für Fördereinrichtungen, Vereinzelner und Zwischenlager verwendet werden. Die Erfindung ist besonders bei der Kommissionieeiner sehr großen Anzahl von unterschiedlichsten Artikeln verwendbar. Sie kann auch kaskadenartig mehrfach hintereinander angeordnet werden. Ein weiterer wesentlicher Vorteil ist, daß die erfindungsgemäße Vorrichtung in einfacher Weise an einen größeren Bedarf, d.h. an eine Vergrößerung der Zahl sowie Erhöhung der Anzahl der zu kommissionierenden Artikel angepaßt werden kann.

Die Erfindung wird anhand der in der Zeichnung dargestellten Ausführungsbeispiele näher erläutert. Es zeigen;
- Fig. 1: schematisch eine Vorrichtung zum Kommissionieren gemäß der Erfindung,
- Fig. 2: schematisch und perspektivisch eine rechnergesteuerte Kommissionieranlage zur Verwendung bei der Erfindung,
- Fig. 3: in Frontansicht eine andere Ausführungsform der Kommissionieranlage,
- Fig. 4: schematisch den Teilschnitt IV-IV in Figur 2.

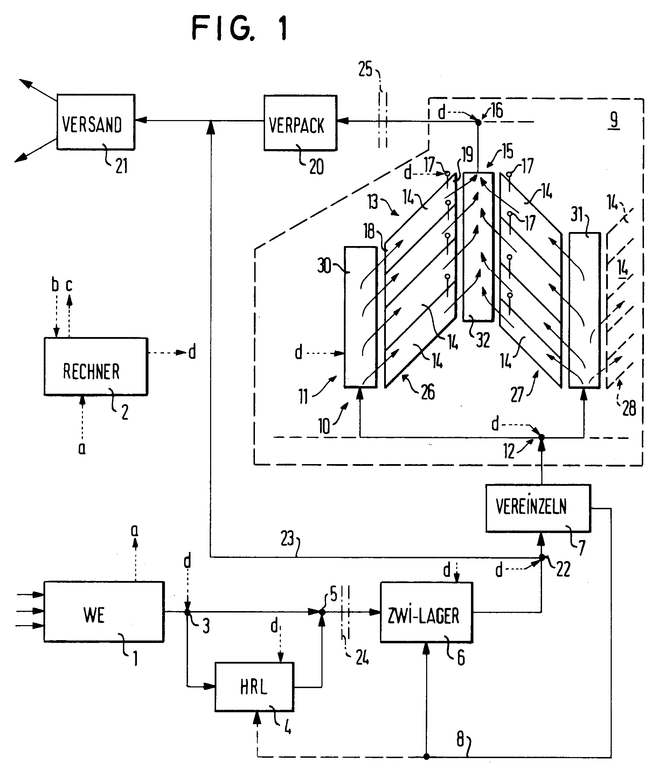

Anhand von Fig. 1 wird die Erfindung mit Bezug auf ein den Versandhandel betreffendes Ausführungsbeispiel näher erläutert.

In üblicher Weise werden ankommende Waren, die von Fremdherstellern und/oder -vertreiber stammen können oder aus eigener Herstellung stammen können, einem Wareneingang 1 zugeführt. Dort werden die angekommenen Waren in üblicher Weise auf Richtigkeit und Vollständigkeit geprüft. Die angekommene Ware betreffenden Daten, Wareneingangsdaten a, werden einem Rechner 2 zugeführt.

Das Erfassen der Daten in codierter Form kann beispielsweise mittels üblicher Strichcode-Aufkleber auf den Waren oder in ähnlicher Weise erfolgen. Zweckmäßig ist es, im gegebenen Fall die Waren mit eigenen Aufklebern oder Laufzetteln zu versehen, die entsprechende Codes tragen.

Für die folgenden Betrachtungen sei zunächst angenommen, daß die ankommenden Waren in Form von Gebinden ankommen, die aus mehreren gleichen Artikeln bestehen, etwa auf einer Palette gestapelten Kartons mit gleicher Füllung. Dem Wareneingang 1 werden derartige Waren in u.U. großen Mengen mit sehr stark unterschiedlichem Rhythmus zugeführt. Die zugeführten Waren müssen kommissioniert werden, d.h. die verschiedenen Artikel müssen in unterschiedlicher Anzahl, abhängig von vorgegebenen Bedingungen, beispielsweise Kundenbestellungen im Versandhandel zusammengestellt werden. Diese Kundenbestellungen sind dem Rechner 2 ebenfalls in Form von Kundenbestelldaten b zugeführt. Insbesondere auf der Grundlage der Wareneingangsdaten a und der Kundenbestelldaten b kann der Rechner 2 ermitteln, ob die jeweilige Kommission zusammenstellbar ist oder ob Bestellungen c automatisch ausgegeben werden müssen. Der Rechner 2 kann dabei wie an sich üblich Hochrechnungen durchführen, aufgrund deren er den wahrscheinlichen Zukunftsbedarf an bestimmten Artikeln ermittelt und entsprechende Nachbestellungen c ausgibt, damit die den Kundenbestelldaten b entsprechenden einzelnen Kommissionen möglichst schnell zusammengestellt werden können. Dabei wird der Rechner 2 ferner berücksichtigen, daß jedes Gebinde eine vorgegebene Anzahl an jeweiligen bestimmten Artikeln umfaßt, es also Gebinde geben wird, deren einzelnen Artikel nur sehr wenig benötigt werden, während es andererseits Artikel gibt, bei denen die Nachfrage so groß ist, daß in sehr kurzer Zeit mehrere Gebinde benötigt werden. Im ersteren Fall wird das Gebinde nach Durchlaufen des Wareneingangs 1 nicht sogleich benötigt, es kann über eine durch Steuerdaten d vom Rechner 2 gesteuerte Weiche 3 einem Hochregallager 4 zugeführt werden. Aus diesem wird es nur bei Bedarf mit Hilfe von Steuerdaten d vom Rechner 2 abgerufen und über eine Zusammenführung 5 einem Zwischenlager 6 zugeführt. Im letzteren Fall wird das Gebinde nach Durchlaufen des Warenlagers 1 durch entsprechende Steuerdaten d an der Weiche 3 gesteuert direkt über die Zusammenführung 5 dem Zwischenlager 6 zugeführt.

Das Zwischenlager 6 dient als Puffer und insbesondere zum Ausgleich von zeitlichen Verschiebungen, die sich aufgrund der unterschiedlichen Menge und des unterschiedlichen Rhythmus bei der Zufuhr der Waren am Wareneingang 1 ergeben. Es handelt sich also um ein stets zur Verfügung stehendes Kleinteilelager (Just-in-time-Lager oder Normkarton-Lager).

Das Zwischenlager 6 kann nach Art eines Warteschlangen- oder Umlaufspeichers in an sich bekannter Weise so ausgebildet sein, daß es mehrere umlaufende Speicherplätze besitzt, deren jeder eines der zugeführten Gebinde aufnehmen kann.

Abhängig von Steuerdaten d vom Rechner 2 wird bei Bedarf dem Zwischenlager 6 eines der Gebinde entnommen und einem Vereinzelner 7 zugeführt. Dieser entnimmt dem zugeführten Gebinde mindestens einen der das Gebinde bildenden Artikel, häufig einige oder gar alle und führt diese einer weiteren Verarbeitung nacheinander zu. Solche Vereinzelner sind an sich bekannt (vgl. DE-C-26 01 027).

Werden dem Gebinde nicht alle Artikel entnommen, so wird das Rest-Gebinde über eine Rückführung 8 zum Zwischenlager 6 oder, insbesondere bei selten benötigten Artikeln, wie in Strichlinien dargestellt, zum Hochregallager 4 zurückgeführt.

Nicht dargestellt ist, daß nach Entnahme aller Artikel aus einem Gebinde das diesem zuzuordnende verbleibende Verpackungs- und Stützmaterial, wie Großkartons, Paletten oder dgl., in üblicher Weise entsorgt wird.

Nicht dargestellt ist ferner, daß gegebenenfalls ein vereinzelter Artikel mit Codes versehen wird, etwa mittels eines Aufklebers oder eines mittels einer Verbindungseinrichtung angebrachten Etiketts.

Die vereinzelten Artikel werden dann einer automatisch arbeitenden und vom Rechner 2 mittels Steuerdaten d gesteuerten Kommissionieranlage 9 zugeführt, die im einzelnen weiter unten näher erläutert wird.

Die Kommissionieranlage 9 besteht im wesentlichen aus einer Artikelsortiereinrichtung 10 mit insbesondere einer Eingangsfördereinrichtung 11 und notwendigenfalls einer Verteilerweiche 12, ferner aus einem Durchlaufspeicher 13 mit mehreren Regalabschnitten 14 und einer Ausgangsfördereinrichtung 15 mit gegebenenfalls einer Zusammenführweiche 16. Ferner ist jedem der Regalabschnitte 14 eine rechnergesteuerte Abgabevorrichtung 17 mit Zähleinrichtung zugeordnet. Jeder Regalabschnitt 14 weist ein Zulaufende 18 und ein Auslaufende 19 auf, wobei letzterem die jeweilige Abgabevorrichtung 17 mit Zähleinrichtung zugeordnet ist. Dieser Kommissionieranlage 9 werden die Artikel bereits in einer durch den Rechner 2 gesteuerten vorsortierten Reihenfolge zugeführt. Mittels der Artikelsortiereinrichtung 10 werden die einzelnen Artikel auf ganz bestimmte jeweilig zugeordnete Regalabschnitte 14 verteilt, wobei jeder Regalabschnitt 14 zur Aufnahme lediglich einer kleinen Anzahl von Artikeln ausgebildet sein muß. Insbesondere können häufig benötigte Artikel auf mehrere Regalabschnitte 14 verteilt werden, während selten benötigte Artikel einem Regalabschnitte 14 nur bei Bedarf zugeführt werden und dieser Regalabschnitte 14 zu anderen Zeiten für andere (ebenfalls selten benötigte) Artikel zur Verfügung steht. Für die Auslegung des Durchlaufspeichers 13, d.h. die Größe und die Anzahl der notwendigen Regalabschnitte 14 werden statistische Daten herangezogen, die den durchschnittlichen Mindestbedarf eines Artikels einerseits (hinsichtlich der Abmessungen) und den durchschnittlichen Maximalbedarf andererseits (hinsichtlich der Anzahl der Regalabschnitte 14) berücksichtigen. Daraus ergibt sich, daß die Regalabschnitte 14 des Durchlaufspeichers 13 keineswegs gleiche Abmessungen aufweisen müssen. Zur Zusammenstellung der einzelnen kundenspezifischen Kommissionen werden ausgehend von Steuerdaten d vom Rechner 2 die einzelnen Artikel mit Hilfe der Abgabevorrichtung 17 in vorgegebener Anzahl und zu einem vorgegebenen Zeitpunkt der Ausgangsfördereinrichtung 15 zugeführt und mit Hilfe der Zusammenführweiche 16 so zusammengestellt, daß am Ausgang der Kommissionieranlage 9 alle eine bestimmten Kommission zuzuordnenden unterschiedlichen Artikel zusammengeführt sind. Die einzelnen Kommissionen werden dann nacheinander einer Verpackungsanlage 20 zugeführt, die die verschiedenen Artikel zu einer oder mehreren Verpackungseinheiten zusammenstellt. Da die Daten der verschiedenen Artikel einer Kommission und insbesondere auch deren Abmessungen bekannt sind, kann mit Hilfe von entsprechenden Daten vom Rechner 2 erreicht werden, daß bei mehreren notwendigen Verpackungseinheiten die diesen jeweils zuzuordnenden Artikel vorsortiert zugeführt werden, und kann ferner erreicht werden, daß das jeweils benötigte Verpackungsmaterial ebenfalls aufgrund entsprechender Daten vom Rechner 2 automatisch zugeordnet wird.

Ferner kann (nicht dargestellt) nicht nur zu einem Haufen, sondern auch in einen Behälter kommissioniert werden. Da, wie erwähnt, die Daten einer Kommission bekannt sind, kann dieser Behälter bereits durch einen Versandkarton gebildet sein, der rechnergesteuert dem stromaufseitigen Ende der Ausgangsfördereinrichtung 15 oder der Zusammenführweiche 16 aus einem Vorrat zugeführt wird.

Die verpackte Kommission wird dann in an sich bekannter Weise einer Versandanlage 21 zugeführt, damit die jeweilige zusammengestellte und verpackte Kommission dem jeweiligen Kunden möglichst schnell übersandt werden kann. Beispielsweise kann die Versandanlage 21 die verpackten, versandfertigen Artikel nach Postleitbezirken und/oder Postleitzahlen sortieren und entsprechend frankieren.

Falls eine Kundenbestellung so bemessen sein sollte, daß sie ein vollständiges Gebinde eines bestimmten Artikels umfaßt, so kann dieses unter Umgehung der Kommissionieranlage 9 direkt der Versandanlage 21 zugeführt werden. Hierzu ist lediglich eine Weiche 22 nach dem Zwischenlager 6 erforderlich, die ausgehend von Steuerdaten d vom Rechner 2 solche Gebinde über einen Bypaßweg 23 direkt der Versandanlage 21 zuführt.

Wesentlich bei der anmeldungsgemäßen Vorgehensweise ist dabei, daß der Rechner 2 aufgrund aller ihm zur Verfügung stehenden Daten stets weiß, wieviele bestimmte Artikel für neue Bestellkommissionen zur Verfügung stehen und wo sich bereits Bestellkommissionen zugeordnete Artikel gerade befinden. Insbesondere die Art der Kommissionieranlage 9 und die Tatsache, daß dieser die Artikel bereits in vorsortierter Reihenfolge zugeführt werden, erlaubt es ferner, ohne Überlaufeinrichtung auszukommen. Eine solche wäre erforderlich, wenn mittels der Artikelsortiereinrichtung 10 nicht alle zugeführten Artikel restlos auf Regalabschnitte 14 des Durch- laufspeichers 13 verteilt werden könnten. Die einer solchen Überlaufeinrichtung zugeführten unterschiedlichsten Artikel müßten wieder erneut der Kommissionieranlage 9 zugeführt werden, die Kommission, die einen dieser in die Überlaufeinrichtung abgegebenen Artikel benötigt, kann nicht erledigt werden, nimmt jedoch Regalplatz weg, da auch die anderen Artikel dieser Kommission aus dem Durchlaufspeichers 13 nicht entnommen werden können. Dies kann sich bis zum Zusammenbruch der gesamten Anlage aufschaukeln. Diese Gefahr wird durch die erfindungsgemäße Vorgehensweise vermieden.

Es kann vorkommen, daß bestimmte Waren nicht in Form von Gebinden zugeführt werden, sondern schon als einzelne Artikel. Aus solchen Artikeln wird nach der Erfassung im Wareneingang 1 und Übermittlung entsprechender Wareneingangsdaten a an den Rechner und nach Durchlaufen eines dem Zwischenlager 6 für die Gebinde entsprechenden Zwischenlagers für diese Artikel die Einspeisung in die Kommissionieranlage 9 bei deren Artikelsortiereinrichtung 10 vorgenommen, wobei durch dieses Zwischenlager eine entsprechende zeitliche Pufferung und damit Vorsortierung im Sinne der vorliegenden Anmeldung erreicht wird.

Andererseits kann es vorkommen, daß bestimmte Artikel nicht in Form von Gebinden dem Wareneingang 1 zugeführt werden, sondern in Form von übergeordneten Großgebinden, die aus mehreren Gebinden bestehen, die wiederum mehrere Artikel enthalten. Bei derartigen Großgebinden kann sinngemäß in gleicher Weise verfahren werden. D.h., die Großgebinde werden in einem dem Zwischenlager 6 entsprechenden Zwischenlager gepuffert, in einem dem Vereinzelner 7 entsprechenden Vereinzelner zu Gebinden vereinzelt und in einer der Kommissionieranlage 9 entsprechenden Kommissionieranlage zu aus Gebinden bestehenden "Quasi-Kommissionen" zusammengestellt. Diese Gebinde-Kommissionen werden dann in der erläuterten Weise über Zwischenlager 6, Vereinzelner 7 und Kommissionieranlage 9 zu Artikel-Kommissionen zusammengestellt und dann der Verpackungsanlage 20 zugeführt. Die rechnergesteuerte Zusammenstellung dieser Quasi-Kommissionen kann vorzugsweise so sein, daß dann die Vorsortierung schon erreicht ist und auf eigenes Zwischenlager 6 verzichtet werden kann, d.h. das Zwischenlager 6 ist durch eine übergeordnete Gebinde-Kommissionieranlage ersetzt.

Das bedeutet, daß der in Fig. 1 dargestellte Anlagenteil zwischen den mit doppelten Strichpunktlinien bezeichneten Grenzen 24 und 25 sinngemäß (d.h. gbfls. ohne eigenes Zwischenlager), selbstverständlich mit unterschiedlichen Abmessungen, hintereinander geschaltet werden kann. Eine solche Hintereinanderschaltung kann mehrfach erfolgen. Beispielsweise kann der Wareneingang 1 einen Container empfangen, der mit mehreren Paletten beladen ist. Jede Palette enthält mehrere Großkartons. Jeder Großkarton enthält mehrere Kleinkartons und jeder Kleinkarton enthält dann mehrere Artikel. Die Häufigkeit des Vorkommens einer Anlieferung in Großgebinden ist entscheidendes Kriterium für eine solche Mehrfachanordnung. Kommt dies allerdings sehr selten vor, so wird ein solcher Großgebinde zweckmäßig bereits im Wareneingang 1 zu Gebinden vereinzelt (nicht dargestellt).

Fig. 1 zeigt ferner noch einige weitere Einzelheiten der Kommissionieranlage 9, die sich als besonders vorteilhaft erwiesen haben.

Die Regalabschnitte 14 des Durchlaufspeichers 13 können in mehreren Gruppen 26,27,28 angeordnet sein. Entsprechend weist die Eingangsfördereinrichtung 11 mehrere Eingangsförderer 30,31 auf, auf die die Artikel mittels der Verteilerweiche 12 rechnergesteuert verteilt werden. Diese Eingangsförderer 30,31 können zur Versorgung einer Gruppe (z.B. der Gruppe 26 beim Eingangsförderer 30) oder auch zur Versorgung mehrerer Gruppen, insbesondere zwei Gruppen wie den Gruppen 27 und 28 beim Eingangsförderer 31 angeordnet sei. In gleicher Weise kann die Ausgangsfördereinrichtung 15 entsprechende mehrere Ausgangsförderer 32 aufweisen, von denen in Fig. 1 lediglich einer dargestellt ist. Auch hier kann ein Ausgangsförderer wie der Ausgangsförderer 32 von mehr als einer Gruppe, insbesondere zwei Gruppen, wie den Gruppen 26 und 27 der Regalabschnitte 14 beschickt werden, wobei dann die den mehreren Ausgangsförderern 32 zugeführten Artikel in der Zusammenführweiche 16 zusammengeführt werden.

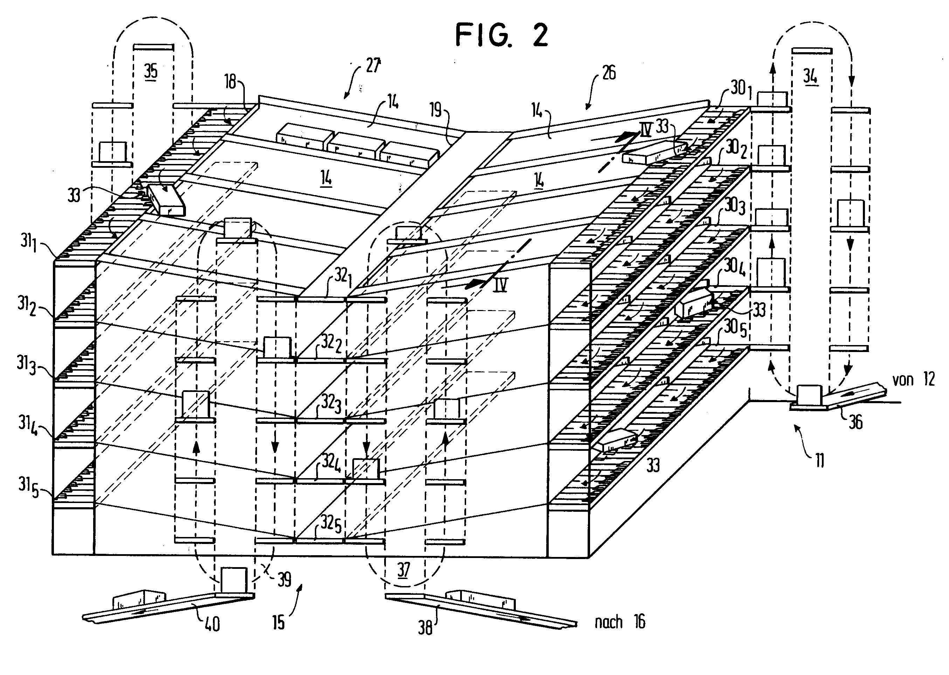

Weitere Einzelheiten der Kommissionieranlage 9 werden im folgenden unter insbesondere Bezugnahme auf Fig. 2 näher erläutert. Dabei werden gleiche Bezugszeichen für gleiche Teile verwendet.

Fig. 2 zeigt eine Anordnung, bei der in jeder Gruppe 26,27 von Regalabschnitten 14 diese in Form von Zeilen und Spalten angeordnet sind, also in mehreren Ebenen oder Zeilen jeweils mehrere Regalabschnitte 14 nebeneinander angeordnet sind. Jeder Regalabschnitte 14 ist dabei zweckmäßig als länglicher schachtartiger Vorratsbehälter ausgebildet, in dem vom Zulaufende 18 zum Auslaufende 19 Artikel hintereinander angeordnet werden können. Das Ausführungsbeispiel zeigt fünf Zeilen mit jeweils vier Regalabschnitten 14, jedoch kann die Anzahl der Regalabschnitte 14 pro Zeile unterschiedlich sein. Jeder Zeile von Regalabschnitten 14 ist ein jeweiliger Eingangsförderer 30 bzw. 31 und ein jeweiliger Ausgangsförderer 32 zugeordnet, wobei die verschiedenen Zeilen durch Indizes 1,2...5 gekennzeichnet sind. Wie dargestellt, weisen die Regalabschnitte 14 eine Neigung vom Zulaufende 18 zum Auslaufende 19 hin auf, so daß eine gesonderte Fördereinrichtung in den Regalabschnitten 14 nicht erforderlich ist und vielmehr die dort abgelegten Artikel aufgrund Schwerkraft in Richtung zum Auslaufende 19 gleiten können. Wenn die hier nicht dargestellte Abgabevorrichtung 17 mit Zähleinrichtung aufgrund Ansteuerung durch Steuerdaten d vom Rechner 2 (vgl. Fig. 1) die Abgabe eines oder mehrerer der im jeweiligen Regalabschnitt 14 enthaltenen Artikel auslöst, so werden diese auf den zugehörigen Auslaufförderer 32 ebenfalls durch Schwerkraft abgelegt und von diesem dann mitgenommen. Der Auslaufförderer 32 kann daher in einfacher Weise als Bandförderer ausgebildet sein. Jedoch kann auch jede andere Art eines Längsförderer verwendet werden.

Den ebenfalls als Längsförderern ausgebildeten Eingangsförderern 30 und 31 muß jedoch für jeden Regalabschnitt 14 ein Querförderer zugeordnet sein, bei dem es sich im einfachsten Fall um einen Ablenkförderer 33 handelt, durch den ein Artikel von dem Längsförderer 30 bzw. 31 herab und in den zugeordneten Regalabschnitt 14 geschoben werden kann.

Wie bereits anhand Fig. 1 erläutert, wird den verschiedenen Eingangsförderern 30,31 der jeweilige auf die Regalabschnitte 14 zu verteilende Artikel von der Verteilerweiche 12 her zugeführt. Die Verteilerweiche kann dabei so ausgeführt sein, daß über einen Zuführ- und Verteilförderer jeder Eingangsförderer 30,31 an seinem Eingangsende direkt mit der Verteilerweiche 12 verbunden ist. Dies ist jedoch bei mehreren Eingangsförderern, insbesondere in einer Anordnung wie gem. Fig. 2 sehr umständlich. Vorteilhaft und wie in Fig. 2 dargestellt, ist einer Gruppe von Eingangsförderern, insbesondere den einer Spaltenanordnung entsprechenden übereinander angeordneten Eingangsförderern 30₁ bis 30₅ bzw. 31₁ bis 31₅ ein jeweiliger Senkrechtförderer 34 bzw. 35 zugeordnet, der zweckmäßig ein Umlaufförderer ist und daher als Warteschlangenförderer dienen kann und der an einer Stelle seines Förderweges, beim Ausführungsbeispiel unten, von der Weiche 12 über einen Zubringerförderer 36 die jeweiligen Artikel nacheinander erhält und auf die einzelnen Eingangsförderer 30₁ bis 30₅ verteilt. Die Ausbildung als Warteschlangenförderer hat den Vorteil, daß dann, wenn aus nicht vorhersehbaren Gründen ein Artikel nicht gleich auf einen Eingangsförderer abgegeben werden kann, dieser Artikel nochmals einen Umlauf in dem Warteschlangenförderer durchführt und dann dem jeweiligen Eingangsförderer zugeführt wird.

In gleicher Weise kann jeder Ausgangsförderer über einen jeweiligen Abführförderer direkt mit der Zusammenführweiche 16 verbunden sein. Auch hier ist es zweckmäßig, jeder Gruppe oder Spalte von übereinander angeordneten Ausgangsförderern 32₁ bis 32₅ zunächst einen Senkrechtförderer 37 zuzuordnen, der auf einen Abführförderer 38 abgibt, der die dort abgegebenen Artikel wiederum zur Zusammenführweiche 16 führt. In Weiterbildung dieses Gedankens kann einer Spalte von Ausgangsförderern 32₁ bis 32₅ ein weiterer, zweiter Senkrechtförderer 39 zugeordnet sein, der auf einen weiteren, zweiten Abführförderer 40 ablegt. Durch diese Maßnahme kann eine zweite Zusammenführweiche (nicht dargestellt) versorgt werden, die auf einem zweiten Weg zu einem anderen Arbeitsplatz der Verpackungsanlage 20 oder sogar zu einer anderen Verpackungsanlage führt. Bei dieser Weiterbildung muß allerdings jedem Ausgangförderer 32₁ bis 32₅ an seinem Abgabeende eine nicht dargestellte Verteilereinrichtung zugeordnet sein, die aufgrund von Steuerdaten d vom Rechner 2 den jeweils zugeführten Artikel entweder auf den ersten Senkrechtförderer 37 oder den zweiten Senkrechtförderer 39 verteilt.

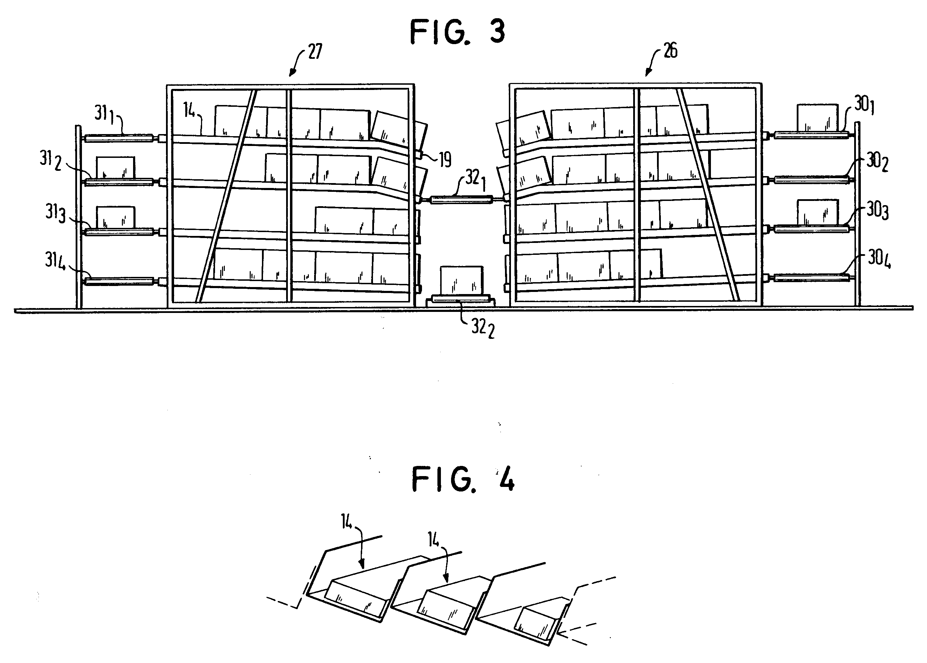

Eine weitere Variante ist in Fig. 3 darstellt. Dort ist gezeigt, daß aus den Regalabschnitten 14 zweier übereinander angeordneter Zeilen von Regalabschnitten 14 auf einen gemeinsamen Ausgangsförderer 32₁ bzw. 32₂ abgelegt werden kann. Dabei kann der Regelabschnitt 14 nahe dem Ausgangsende 19 eine größere Neigung aufweisen.

Je nach Art der zu kommissionierenden Artikel, die in den verschiedenen Regalabschnitten 14 abgelegt werden, kann auch aus mehr als zwei übereinander angeordneten Regalabschnitten auf einen gemeinsamen Ausgangsförderer abgelegt werden.

Die verschiedenen Artikel sind im allgemeinen äußerst unterschiedlich in Gewicht, Format und Abmessungen. In den Fig. sind lediglich quader- bzw. kartonförmige Artikel, allerdings unterschiedlicher Abmessungen dargestellt, jedoch nicht mit Bezugszeichen versehen. Bereits die einfache Darstellung solcher quader- bzw. kartonartiger Artikel zeigt, daß hier sehr unterschiedliche Formen möglich sind. Die größte Flexibilität der gesamten Anlage wird selbstverständlich dann erreicht, wenn jeder Regalabschnitt 14 zur Aufnahme jedes beliebigen Artikels geeignet ist. Aus Platzeinsparungsgründen kann es jedoch zweckmäßig sein, Regalabschnitte 14 unterschiedlicher Abmessungen zur Verfügung zu stellen. Beispielsweise ist denkbar, Regalabschnitte 14 für Artikel besonders großer Höhenabmessungen in einer Gruppe oder gar einer Zeile einer Gruppe vorzusehen. Das gleiche ist für besonders flache Artikel denkbar. In gleicher Weise wird man die Länge der Regalabschnitte 14 zumindest einer Gruppe von der größten Länge von zu behandelnden Artikeln abhängig machen, im übrigen jedoch versuchen, eine bestimmte Mindestanzahl von Artikeln durchschnittlicher Abmessungen in einem Regalabschnitt unterzubringen. Fig. 2 zeigt beispielsweise links oben einen Regalabschnitt 14 mit drei hintereinander angeordneten kartonartigen Artikeln, wobei offensichtlich ein vierter solcher Artikel keinen Platz mehr hat. Müßte ein weiterer solcher Artikel in dem Durchlaufspeicher 13 abgelegt werden, so ist dieser in einem anderen Regalabschnitt 14 abzulegen, wobei dieser durchaus in einer anderen Gruppe der Regalabschnitte 14 sein kann. Fig. 3 zeigt eine Ausführungsform bei der in jedem Regelabschnitt 4 kartonartige Artikel hintereinander unterbringbar sind.

Bei der Entwicklung einer solchen Anlage wird man zur Bemessung Normkartongrößen heranziehen.

Bei manchen Artikeln ist es unerheblich, in welcher Ausrichtung sie durch die Anlage gefördert werden. Wichtig ist lediglich, daß am Auslaufende 19 jedes Regalabschnittes 14 nur eine vorgegebene vorbestimmte Menge der dort abgelegten Artikel auf den Ausgangsförderer 32 abgebbar ist. Jedoch ist ein solches Drehen der Artikel in den Regalabschnitten 14 zu verhindern, die ein Verkeilen innerhalb der Regalabschnitte 14 und damit ein Verstopfen dieses Förderweges zur Folge hätte. Aus diesem Grund ist es zweckmäßig, wenn die Artikel in einer stets gleichen bevorzugten Lage durch zumindest die Regalabschnitte 14 gefördert werden, und zwar unabhängig davon, welcher jeweilige Artikel gerade in einem der Regalabschnitte 14 ist. Die bevorzugte Ausrichtung des jeweiligen Artikels kann bereits durch den Vereinzelner 7 vorgegeben werden, jedoch auch an anderer Stelle erreicht werden. Ist diese vorgegebene Richtung, die als Ausrichtung in Förderrichtung bezeichnet werden kann, einmal erreicht, so soll sie nicht mehr aufgehoben werden.

Dies wird dadurch erreicht, daß der Querförderer 33 als Ablenkförderer ausgebildet ist, also als Förderer, der nicht den gesamten Artikel in Querrichtung verschiebt, sondern das in Förderrichtung vordere Ende stärker ablenkt und dieses zeitlich früher in den Regalabschnitt 14 führt. Ferner ist es zweckmäßig, wenn jeder Regalabschnitt 14 in Förderrichtung gesehen unter einem Winkel zu dieser angeordnet ist, der größer als 90° und kleiner als 180°, vorzugsweise etwa 135° ist, wie in Fig. 1 dargstellt, so daß der Artikel durch den Querförderer 33 leichter in den jeweiligen Regalabschnitt 14 abgelenkt werden kann.

Es ist ferner von Vorteil, wenn zumindestens eine Seitenfläche der Artikel in stets vorgegebener Lage in den Regalabschnitten 14 ist. Dies kann dadurch erreicht werden, daß, wie in Fig. 4 dargestellt, jeder Regalabschnitt 14 leicht geneigt ist, und zwar in Richtung gegen die Förderrichtung von Eingangs- und Ausgangsförderer 11,15.

Die bevorzugte Lage ist aus Stabilitätsgründen so, daß bei Quadern die Schmalseite in bzw. gegen die Förderrichtung oder Flußrichtung zeigt und die größte Fläche aufliegt.

Die dargestellten Ausführungsbeispiele zeigen, daß die anmeldungsgemäße Kommissionieranlage 9 gem. Fig. 1, wie dort bereits erläutert, erweiterbar ist, und zwar in allen drei Richtungen. Diese Erweiterung kann erfolgen durch Hinzufügen weiterer Zeilen von Regalabschnitten 14 und zugehöriger Eingangs- und Ausgangsförderer 30,32 sowie Erweiterung des zugehörigen Senkrechtförderers 34. Die Erweiterung kann erfolgen durch Ansetzen weiterer Regalabschnitte 14 in den Zeilen einer bestehenden Gruppe und entsprechender Verlängerung der zugehörigen Eingangs- und Ausgangsförderer bzw. entsprechendem Versetzen der zugehörigen Senkrechtförderer 34 bzw. 37. Ferner kann eine vollständig neue Gruppe von Regalabschnitten 14 mit zugehörigen Eingangs- und Ausgangsförderern sowie entsprechenden Senkrechtförderern und Zubringer- bzw. Abführförderern vorgesehen werden. Bei entsprechender Ausbildung der Eingangsförderer, insbesondere deren Querförderer 33 kann zur Versorgung der Regalabschnitte 14 zweier benachbarter Gruppen von Regalabschnitten 14 ein gemeinsamer Eingangsförderer verwendet werden wie das beim Eingangsförderer 31 gem. Fig. 1 bereits erläutert worden ist. Wie erläutert, können die Regalabschnitte 14 als längliche schachtartige Vorratsbehälter ausgebildet sein. Dies erlaubt den Aufbau aus Einzelteilen, aber auch den Austausch und die Wartung einzelner Regalabschnitte 14 ohne die gesamte Anlage stillsetzen zu müssen. Jedoch können auch abhängig von den jeweiligen Artikeln auch andere Bauarten verwendet sein, wie Durchlaufregale, Kanäle oder dgl.

Ferner ergibt sich aus der Erläuterung, daß für die verschiedenen Förderer handelsübliche Typen verwendet werden können.

Wie bereits eingangs erwähnt, ist es für die vorliegende Anmeldung 9 wesentlich, daß der Rechner 2 alle Wareneingangsdaten a und alle Kundenbestelldaten b erhält und ausgehend von diesen sowie den bekannten Betriebsdaten (Abmessungen, Fördergeschwindigkeiten u.dgl.) der Anlage die entsprechenden Steuerdaten d selbst bestimmt und auch abhängig von diesen die Bestandsdaten fortschreibt. Aufgrund der Konzeption der Gesamtanlage weiß daher der Rechner 2 welcher Artikel sich gerade wo befindet und wo sich dieser Artikel nach einer bestimmten Zeit befindet oder befinden würde, wenn bestimmte weitere Steuerdaten abgegeben werden. Hieraus und aus der Forderung, daß die einer Kommission zuzuordnenden Artikel gleichzeitig der Verpackungsanlage 20 zugeführt werden müssen, kann der Rechner 2 ermitteln, wann ein bestimmter Artikel vom Vereinzelner 7 zur Verteilerweiche 12 geführt werden muß und wann welches einem Artikel zuzuordnende Gebinde dem Zwischenlager 6 oder dem Hochregallager 4 entnommen werden muß. Aufgrund dieser durch die anmeldungsgemäße Anlage gegebene Möglichkeit kann auf eine bestimmte Nachfrage sofort geantwortet werden, ob im Fall einer Bestellung diese sogleich durchgeführt werden kann und kann hierfür ferner eine Reservierungszeit eingeräumt werden.

Dies erlaubt wiederum, die Verweilzeit der Artikel zwischen Wareneingang 1 und Versandanlage 21 sehr kurz zu halten, was sehr erwünscht ist, da alle Artikel zwischen Wareneingang 1 und Versandanlage 21 ein u.U. sehr hohes totes Kapital darstellen.

Je kürzer die Verweilzeit der jeweiligen Artikel ist, umso geringer istauch der Platzbedarf für die gesamte Anlage.

Andererseits ist es nicht erwünscht, unvollständige Kommissionen zwischenspeichern zu müssen, bis die noch fehlenden Artikel dem Wareneingang 1 zugeführt werden. In gleicher Weise ist es nicht erwünscht, Teillieferungen durchzuführen, d.h. einzelne Kommissionen aufteilen zu müssen und nur eine Teilkommission zum Versand zu bringen. Die anmeldungsgemäße Konzeption erlaubt es auch, daß die Ausführung einer Kommission zurückgestellt wird bis über Wareneingangsdaten a sowie die sonst bereits vorliegenden Daten sichergestellt ist, daß die jeweilige Kommission ausgeführt werden kann.

Anhand einer Überlegung sei der Platzbedarf für die Kommissionieranlage 9 vom Typ nach den Fig. 1 und 2 erläutert. Vorausgesetzt sei eine Normkartongröße von 60x50x40 und die Vorgabe, in einem Regalabschnitt 14 drei derartige Normkartons unterzubringen. Bei einer Breite für Eingangsförderer und Ausgangsförderer von ca. 50-60 cm ergibt sich eine Breite der Anordnung von ca. 5 m. Der Abstand übereinander liegender Regalabschnitte liegt unter Berücksichtigung der notwendigen Abmessungen für die Förderer in der Größenordnung von etwa 60 cm. Die Breite jedes Regalabschnittes liegt in etwa bei der Breite des Kartons. In einem Raumvolumen von 20x25x25 m ist daher Platz für 32.000 verschiedene und für insgesamt 96.000 Normkartons. Diese Normkartons belegen jedoch den Platz nicht statisch, sondern durchlaufen diesen in wesentlichem Umfang kontinuierlich.

Die erfindungsgemäße Anmeldung ist nicht nur im Versandhandel, insbesondere Großversandhandel, anwendbar, sondern auch dort, wo aus zahlreichen einzelnen Artikeln stets oder zumindestens in großer Anzahl gleiche Kommissionen zusammengestellt werden müssen.

## Patentansprüche

1. Kommissioniervorrichtung (9) für Artikel,
mit einer Zuführeinrichtung (1, 3-8), die die Artikel dem Eingangsabschnitt einer Eingangsfördereinrichtung (11) nacheinander zuführt,
mit einer Anordnung von neben- und übereinander in Zeilen und Spalten angeordneten Regalabschnitten (14) für zu kommissionierende Artikel nach Art eines Durchlaufspeichers, wobei die Zulaufenden (18) der Regalabschnitte (14) der Eingangsfördereinrichtung (11) zugeordnet sind, die die nacheinander zugeführten Artikel rechnergesteuert unter Berücksichtigung der Anzahl von in den Regalabschnitten (14) bereits enthaltenen jeweiligen Artikel einzeln auf einen zugeordneten der Regalabschnitte (14) verteilt,
mit einer Ausgangsfördereinrichtung (15), längs der die Auslaufenden (19) der Regalabschnitte (14) angeordnet sind, die jeweils eine rechnergesteuerte Abgabevorrichtung (17) zur selektiven Abgabe von im jeweiligen Regalabschnitt (14) gespeicherten Artikeln an die Ausgangsfördereinrichtung (15) aufweisen, wobei eine Zähleinrichtung die jeweils in jedem der Regalabschnitte (14) enthaltenen Artikel erfaßt, und
mit einem Rechner (2), der abhängig von der Art der einzelnen Artikel, den Zählwerten der Zähleinrichtungen und der Art der zu bildenden Kommissionen die Zuführeinrichtung (1, 3-8), die Eingangsfördereinrichtung (11), die Abgabevorrichtungen (17) und die Ausgangsfördereinrichtung (15) steuert,
dadurch **gekennzeichnet,**
daß die Eingangsfördereinrichtung (11) Längsförderer (30₁..., 31₁...) aufweist, denen an jedem Zulaufende (18) eines Regalabschnitts (14) ein jeweiliger, als Ablenkförderer ausgebildeter Querförderer (33) zugeordnet ist, der den Artikel in der durch die Förderrichtung vorgegebenen Ausrichtung in den jeweiligen Regalabschnitt (14) einführt,
daß jeder Regalabschnitt (14), in der Horizontalebene betrachtet, unter einem Winkel größer als 0° und Kleiner als 90°, bevorzugt etwa 45°, zur Förderrichtung des jeweiligen Längsförders (30₁..., 31₁...) der Eingangsfördereinrichtung (11) angeordnet ist und
daß jeder Regalabschnitt (14) ferner, in der Horizontalebene betrachtet, unter einem Winkel größer als 90° und Kleiner als 180°, bevorzugt etwa 135°, zur Förderrichtung der Ausgangsfördereinrichtung (15) angeordnet ist.

2. Kommissioniervorrichtung nach Anspruch 1,
dadurch **gekennzeichnet,**
daß die einzelnen Artikel in der durch die Förderrichtung vorgegebenen Ausrichtung der Eingangsfördereinrichtung (11) durch die Zuführeinrichtung (1, 3-8) zugeführt werden.

3. Kommissioniervorrichtung nach Anspruch 1 oder 2,
dadurch **gekennzeichnet,**
daß die Zuführeinrichtung (1, 3-8) einen automatischen und rechnergesteuerten Vereinzelner (7) aufweist, der zumindest einige oder alle Artikel eines einem Wareneingang zugeführten Gebindes diesem entnimmt und dem Eingangsabschnitt der Eingangsfördereinrichtung (11) nacheinander zuführt.

4. Kommissioniervorrichtung nach Anspruch 3,
dadurch **gekennzeichnet,**
daß die Zuführeinrichtung (1, 3-8) einen Zwischenspeicher (4,6) für nacheinander einem Wareneingang zugeführte Gebinde unterschiedlicher Artikel und für rückgeführte nicht vollständig vereinzelte Gebinde als stets zur Verfügung stehendes Kleinteilelager aufweist.

5. Kommissioniervorrichtung nach Anspruch 3 oder 4,
dadurch **gekennzeichnet,**
daß der Zuführeinrichtung (1, 3-8) eine Weiche (22) vor dem Vereinzelner (7) zugeordnet ist, mittels der bei Bedarf ein Gebinde an der Kommissioniervorrichtung (9) vorbei direkt zum Ende deren Ausgangsfördereinrichtung (15) führbar ist.

6. Kommissioniervorrichtung nach Anspruch 4 oder 5,
dadurch **gekennzeichnet,**
daß der Zwischenspeicher (6) in gleicher Weise wie die Kommissioniervorrichtung (9) jedoch bemessen für die Gebinde aufgebaut ist und diese Gebinde aus einem Großgebinde vereinzelt zugeführt werden.

7. Kommissioniervorrichtung nach einem der Ansprüche 1 bis 6,
dadurch **gekennzeichnet,**
daß bei der Anordnung der Regalabschnitte (14) in eilen und Spalten jeder Zeile ein Längsförderer (30₁..., 30₂..., 30₁..., 30₂...) zugeordnet ist, denen eingangsseitig ein Warteschlangenförderer (34,35) zugeordnet ist, über den jeweils entsprechende Artikel zuführbar sind.

8. Kommissioniervorrichtung nach Anspruch 7,
dadurch **gekennzeichnet,**
daß der Warteschlangenförderer (34,35) ein Umlaufförderer, insbesondere ein Senkrechtförderer ist.

9. Kommissioniervorrichtung nach einem der Ansprüche 1 bis 8,
dadurch **gekennzeichnet,**
daß bei mehreren Regalabschnitten (14) pro gleichem Artikel die Anzahl solcher Regalabschnitte (14) durch den durchschnittlichen Maximalbedarf bestimmt ist.

10. Kommissioniervorrichtung nach einem der Ansprüche 1 bis 9,
dadurch **gekennzeichnet,**
daß die Abmessungen jedes Regalabschnitts (14) durch eine normierte Artikelgröße wie beispielsweise die Abmessungen eines Normkartons bestimmt sind.

11. Kommissioniervorrichtung nach einem der Ansprüche 1 bis 10,
dadurch **gekennzeichnet,**
daß einer Zeile von Regalabschnitten (14) solcher Regalabschnitte (14) zugeordnet sind, die eine maximale Höhenabmessung nicht überschreiten.

12. Kommissioniervorrichtung nach einem der Ansprüche 1 bis 11,
dadurch **gekennzeichnet,**
daß jeder Regalabschnitt (14) durch einen schachtartigen länglichen Vorratsbehälter mit einer Neigung vom Zulauf- (18) zum Auslaufende (19) gebildet ist.

13. Kommissioniervornichtung nach einem der Ansprüche 1 bis 12,
**gekennzeichnet** durch eine Querneigung der Regalabschnitte (14), wobei der tiefer liegende Rand in Förderrichtung des Längsförderers (30₁..., 31₁...) der Eingangsfördereinrichtung (11) weist.

14. Kommissioniervorrichtung nach einem der Ansprüche 1 bis 13,
dadurch **gekennzeichnet,**
daß die Ausgangsfördereinrichtung (15) Längsförderer (32₁..., 32₂...) aufweist, die jeweils mindestens einer Zeile von Regalabschnitten (14) zugeordnet sind.

15. Kommissioniervorrichtung nach einem der Ansprüche 1 bis 14,
**gekennzeichnet** durch mindestens zwei Gruppen (26,27,28) von Regalabschnitten (14), wobei eine Eingangsfördereinrichtung (11) zwischen zwei benachbarten Gruppen (27,28) angeordnet ist und die Zulaufenden (18) der Regalabschnitte (14) dieser beiden Gruppen (27,28) der Eingangsfördereinrichtung (11) zugewandt sind.

16. Kommissioniervorrichtung nach Anspruch 15,
**gekennzeichnet** durch mehr als zwei Gruppen (26,27,28) von Regalabschnitten (14) und eine Verteilerweiche (12), die die zugeführten Artikel auf die jeweiligen Eingangsfördereinrichtungen (11) verteilt.

17. Kommissioniervorrichtung nach einem der Ansprüche 1 bis 16,
**gekennzeichnet** durch mindestens zwei Gruppen (26,27,28) von Regalabschnitten (14), wobei eine Ausgangsfördereinrichtung (15) zwischen zwei benachbarten Gruppen (26,27) angeordnet ist und die Auslaufenden (19) der Regalabschnitte (14) dieser beiden Gruppen (26,27) der Ausgangsfördereinrichtung (15) zugewandt sind.

18. Kommissioniervorrichtung nach einem der Ansprüche 1 bis 17,
**gekennzeichnet** durch mehr als zwei Gruppen (26,27,28) von Regalabschnitten (14), mindestens einen Warteschlangenförderer (37,39) am Ausgangsende jeder Ausgangsfördereinrichtung (15) und eine Zusammenführweiche (16), die die abgegebenen Artikel von den Warteschlangenförderern (37,39) zu Kommissionen vereinigt.

19. Kommissioniervorrichtung nach einem der Ansprüche 1 bis 18,
dadurch **gekennzeichnet,**
daß von den Regalabschnitten (14) oder den Ausgangsfördereinrichtungen (15) direkt in Versandschalen oder Versandkartons kommissionierbar ist.

20. Kommissioniervorrichtung nach einem der Ansprüche 1 bis 19,
dadurch **gekennzeichnet,**
daß rechnergesteuert ein einer Kommission zugeordneter Versandkarton der Ausgangsfördereinrichtung (15), gegebenenfalls einer Zusammenführweiche (16) für mehrere Ausgangsfördereinrichtungen (15), zuführbar ist.

21. Kommissioniervorrichtung nach einem der Ansprüche 1 bis 21,
dadurch **gekennzeichnet,**
daß der Rechner (2) ausgehend von Wareneingangsdaten (a), Kommissionen zugeordneten Kundenbestelldaten (b) und den Artikelfluß-Größen die Zufuhr von Artikeln, deren Verteilung auf die Regalabschnitte (14) und deren Abfuhr in Kommissionen steuert (Steuerdaten d).

22. Kommissioniervorrichtung nach Anspruch 21,
dadurch **gekennzeichnet,**
daß der Rechner (2) ferner Nachbestellungen (c) veranlaßt.

## Claims

1. Apparatus (9) for assembling consignments of articles,
having a supply arrangement (1, 3-8) which supplies the articles successively to the intake section of an inward conveying system (11),
having an arrangement of rack sections (1), arranged next to one another and above one another in rows and columns, for the articles to be assembled into consignments, in the manner of a throughflow store, whereby the loading ends (18) of the rack sections (14) are associated with the inward conveying system (11) which distributes the successively supplied articles individually each to an assigned one of the rack sections (14) under computer control taking into account the quantity of the article concerned already held in the rack sections (14),
having a outward conveying system (15) along which the unloading ends (19) of the rack sections (14) are arranged, having each a computer controlled dispensing device (17) for selectively dispensing the articles stored in the respective rack section (14) to the outward conveying system (15), whereby a counting device detects the articles respectively held in each rack section (14), and
having a computer (2) which, in dependence upon the kinds of the individual articles, the count values of the counting devices and the kinds of consignments to be assembled, controls the supply arrangement (1, 3-8), the inward conveying system (11), the dispensing means (17) and the outward conveying system (15),
characterised in that
the inward conveying system (11) has longitudinal conveyors (30₁..., 31₁...) with which there are associated, at each loading end (18) of a rack section (14), a respective transverse conveyor (33) formed as a diverting conveyor which introduces the article into the respective rack section (14) in the orientation predetermined by the direction of conveying,
in that each rack section (14), considered in the horizontal plane, is arranged at an angle greater than 0° and less than 90°, preferably about 45°, to the direction of conveying of the respective longitudinal conveyor (30₁..., 31₁...) of the inward conveying system (11), and
in that each rack section (14), considered in the horizontal plane, is further arranged at an angle greater than 90° and less than 180°, preferably about 135°, to the direction of conveying of the outward conveying system (15).

2. Consignment assembly apparatus according to claim 1,
characterised in that
the individual articles are supplied by the supply arrangement (1, 3-8) in the orientation determined by the direction of conveying of the inward conveying system (11).

3. Consignment assembly apparatus according to claim 1 or 2,
characterised in that
the supply arrangement (1, 3-8) has an automatic and computer-controlled separator (7) which removes all, or at least some, of the articles from a pack delivered to a goods receiving point and supplies them in succession to the intake section of the inward conveying system (11).

4. Consignment assembly apparatus according to claim 3,
characterised in that
the supply arrangement (1, 3-8) has an intermediate store (4, 6), as a ready-use small parts store, for packs of different articles supplied successively to the goods receiving point, and for returned partly emptied packs.

5. Consignment assembly apparatus according to claim 3 or 4,
characterised in that
a switch (22) before the separator (7) is associated with the supply arrangement (1, 3-8), by means of which a pack can, when necessary, be led past the consignment assembly apparatus (9) directly to the end of its outward conveying system (15).

6. Consignment assembly apparatus according to claim 4 or 5,
characterised in that
the intermediate store (6) is constructed similarly to the consignment assembly apparatus (9) but is dimensioned for the packs, and these packs are supplied unpacked from a giant pack.

7. Consignment assembly apparatus according to any of claims 1 to 6,
characterised in that
with the arrangements of the rack sections (14) in rows and columns each row has associated with it a longitudinal conveyor (30₁..., 30₂..., 30₁..., 30₂...) with which a queuing conveyor (34, 35) is associated at its head end, by way of which respective corresponding articles can be supplied.

8. Consignment assembly apparatus according to claim 7,
characterised in that
the queuing conveyor (34, 35) is a circulating conveyor, in particular a vertical conveyor.

9. Consignment assembly apparatus according to any of claims 1 to 8,
characterised in that
when there are a plurality of rack sections (14) for articles of the same kind, the number of such rack sections (14) is determined by the average maximum demand.

10. Consignment assembly apparatus according to any of claims 1 to 9,
characterised in that
the dimensions of each rack section (14) are determined by a standardised article size such as for example the dimensions of a standard carton.

11. Consignment assembly apparatus according to any of claims 1 to 10,
characterised in that
rack sections (14) whose height does not exceed a maximum are assigned to a row of rack sections (14).

12. Consignment assembly apparatus according to any of claims 1 to 11,
characterised in that
each rack section (14) is formed by an elongate chute-like stock container with an inclination from the loading (18) to the unloading (19) end.

13. Consignment assembly apparatus according to any of claims 1 to 12,
characterised by a transverse inclination of the rack sections (14), with the deeper edge pointing to the direction of conveying of the longitudinal conveyor (30₁ ..., 31₁ ...) of the inward conveying system (11).

14. Consignment assembly apparatus according to any of claims 1 to 13,
characterised in that
the outward conveying system (15) comprises longitudinal conveyors (32₁ ..., 32₂...) each of which is associated with at least one respective row of rack sections (14).

15. Consignment assembly apparatus according to any of claims 1 to 14,
characterised by at least two groups (26, 27, 28) of rack sections (14) with an inward conveying system (11) arranged between two neighbouring groups (27, 28) and the loading ends (18) of the rack sections (14) of these two groups (27, 28) being adjacent to the inward conveying system (11).

16. Consignment assembly apparatus according to claim 15,
characterised by more than two groups (26, 27, 28) of rack sections (14) and a distributing switch (12) that distributes the articles supplied to the respective inward conveying means (11).

17. Consignment assembly apparatus according to any of claims 1 to 16,
characterised by at least two groups (26, 27, 28) of rack sections (14), with an outward conveying system (15) arranged between two neighbouring groups (26, 27) and the unloading ends (19) of the rack sections (14) of these two groups (26, 27) being adjacent to the outward conveying system (15).

18. Consignment assembly apparatus according to any of claims 1 to 17,
characterised by more than two groups (26, 27, 28) of rack sections (14), at least one queuing conveyor (37, 39) at the unloading end of each outward conveying system (15), and a junction switch (16) that combines the articles delivered from the queuing conveyor (37, 39) to make up consignments.

19. Consignment assembly apparatus according to any of claims 1 to 18,
characterised in that
consignments can be assembled directly into shipping trays or dispatch cartons from the rack sections (14) or the outward conveying system (15).

20. Consignment assembly apparatus according to any of claims 1 to 19,
characterised in that
a dispatch carton associated with a consignment can be supplied under computer control to the outward conveying system (15), or to a junction switch (16) for a plurality of outward conveying systems (15).

21. Consignment assembly apparatus according to any of claims 1 to 21,
characterised in that
the computer (2), on the basis of goods received data (a), customer order data (b) associated with consignments and the article-flow values, controls (control data d) the supply of articles, their distribution on to the rack sections (14) and their conveyance into consignments.

22. Consignment assembly apparatus according to claim 21,
characterised in that
the computer (2) also issues replacement orders (c).

## Revendications

1. Dispositif de consignation (9) pour des articles, avec un dispositif d'amenée (1, 3 à 8), qui amène les articles l'un après l'autre à la section d'entrée d'un dispositif transporteur d'entrée (11), avec un agencement de sections de rayonnages (14) disposés côte à côte et superposés en lignes et en colonnes, pour des articles à consigner à la manière d'un magasin à circulation, les extrémités d'entrée (18) des sections de rayonnages (14) étant associées au transporteur d'entrée (11), les articles amenés l'un après l'autre sous la commande d'un ordinateur en tenant compte du nombre des articles respectifs déjà contenus dans les sections de rayonnages (14) étant répartis un à un sur une section de rayonnage (14) associée,
avec un transporteur de sortie (15) le long duquel sont disposées les extrémités de sortie (19) des sections de rayonnages (14) qui présentent chacune un dispositif de livraison (17) pour la livraison sélective d'articles stockés dans les sections de rayonnages (14) respectives au transporteur de sortie (15), un dispositif de comptage dénombrant les articles contenus dans chacune des sections de rayonnages (14) et
avec un ordinateur (2) qui commande, en fonction du type individuel des articles, des quantités décomptées et du genre des consignations à constituer, le dispositif d'amenée (1, 3 à 8), le transporteur d'entrée (11), les dispositifs de livraison (17) et le transporteur de sortie (15),
**caractérisé** en ce que le dispositif transporteur d'entrée (11) présente des transporteurs longitudinaux (30₁..., 31₁...) auxquels est associé, à chaque extrémité d'entrée (18) d'une section de rayonnage (14), un transporteur transversal (33) respectif, sous la forme d'un transporteur de déviation qui introduit l'article, dans le sens prédéterminé par le sens de transport,dans la section de rayonnage (14) respective,
en ce que chaque section de rayonnage (14), vue dans le plan horizontal, est disposée sous un angle supérieur à 0° et inférieur à 90°C, de préférence voisin de 45°, par rapport au sens de transport du transporteur longitudinal (30₁..., 31₁...) du transporteur d'entrée (11), et
en ce que chaque section de rayonnage (14) vue dans le plan horizontal, est en outre disposée sous un angle supérieur à 90° et inférieur à 180°, de préférence voisin de 135°, par rapport au sens de transport du transporteur de sortie (15).

2. Dispositif de consignation selon la revendication 1, caractérisé en ce que les articles individuels sont amenés par le dispositif d'amenée (1, 3 à 8) dans le sens prédéterminé par le sens du transporteur d'entrée (11).

3. Dispositif de consignation selon la revendication 1 ou 2, caractérisé en ce que le dispositif d'amenée (1, 3 à 8) présente un séparateur (7) automatique et commandé par ordinateur, qui prélève au moins quelques articles ou tous les articles d'un colis amené à une entrée des marchandises, et les amène à la section d'entrée du transporteur d'entrée (11).

4. Dispositif de consignation selon la revendication 3, caractérisé en ce que le dispositif d'amenée (1, 3 à 8) présente un magasin intermédiaire (4, 6) pour des colis d'articles différents amenés l'un après l'autre à une entrée des marchandises et pour des colis non complètement séparés, en tant que petit magasin partiel disponible en permanence.

5. Dispositif de consignation selon la revendication 3 ou 4, caractérisé en ce qu'un aiguillage (22) est associé au dispositif d'amenée (1, 3 à 8) en avant du séparateur (7), au moyen duquel, au besoin, un colis peut être conduit directement au transporteur de sortie (15) du dispositif de consignation (9) en contournant ce dernier.

6. Dispositif de consignation selon la revendication 4 ou 5, caractérisé en ce que le magasin intermédiaire (6) est constitué de la même manière que le dispositif de consignation (9) mais avec des dimensions pour les colis, et ces colis sont amenés un à un après avoir été séparés à partir d'un grand colis.

7. Dispositif de consignation selon une des revendications 1 à 6 caractérisé en ce que, dans la disposition des sections de rayonnages (14) en lignes et en colonnes, un transporteur longitudinal (30₁..., 30₂..., 30₁...30₂...) est associé à chaque ligne, auquel est associé, sur son côté d'entrée, un transporteur de file d'attente (34, 35) au moyen duquel les articles respectifs correspondants peuvent être amenés.

8. Dispositif de consignation selon la revendication 7, caractérisé en ce que le transporteur de file d'attente (34, 35) est un transporteur sans fin, en particulier un transporteur vertical.

9. Dispositif de consignation selon une des revendications 1 à 8, caractérisé en ce que, au cas où il y a plusieurs sections de rayonnages (14) pour un même article, le nombre de ces sections de rayonnages (14) est déterminé par le besoin maximal moyen.

10. Dispositif de consignation selon une des revendications 1 à 9, caractérisé en ce que les dimensions de chaque section de rayonnage (14) sont déterminées par une taille normalisée des articles, telle, par exemple, que les dimensions d'une caisse en carton normalisée.

11. Dispositif de consignation selon une des revendications 1 à 10, caractérisé en ce qu'à une ligne de sections de rayonnages (14) sont associées des sections de rayonnages (14) qui ne dépassent pas une hauteur maximale.

12. Dispositif de consignation selon une des revendications 1 à 11, caractérisé en ce que chaque section de rayonnage (14) est formée d'un récipient de stockage allongé, analogue à une cuve, avec une pente de l'extrémité d'entrée (18) à l'extrémité de sortie (19).

13. Dispositif de consignation selon une des revendications 1 à 12, caractérisé par une pente transversale des sections de rayonnages (14), le bord le plus bas étant tourné en direction du sens de transport du transporteur longitudinal (30₁..., 31₁...) du transporteur d'entrée (11).

14. Dispositif de consignation selon une des revendications 1 à 13, caractérisé en ce que le transporteur de sortie (15) présente des transporteurs longitudinaux (32₁..., 32₂...) qui sont chaque fois associés à au moins une ligne de sections de rayonnages (14).

15. Dispositif de consignation selon une des revendications 1 à 14, caractérisé par au moins deux groupes (26, 27, 28) de sections de rayonnages (14), un transporteur d'entrée (11) étant disposé entre deux groupes voisins (27, 28), et les extrémités d'entrée (18) des sections de rayonnages (14) de ces deux groupes (27, 28) étant tournées vers le transporteur d'entrée (11).

16. Dispositif de consignation selon la revendication 15, caractérisé en ce qu'il comporte plus de deux groupes (26, 27, 28) de sections de rayonnages (14) et un aiguillage répartiteur (12) qui répartit les articles amenés sur le transporteur d'entrée (11) respectif.

17. Dispositif de consignation selon une des revendications 1 à 16, caractérisé par au moins deux groupes (26, 27, 28) de sections de rayonnages (14), un transporteur de sortie (15) étant disposé entre deux groupes voisins (26, 27) et les extrémités de sortie (19) des sections de rayonnages (14) de ces deux groupes (26, 27) étant tournées vers le transporteur de sortie (15).

18. Dispositif de consignation selon une des revendications 1 à 17, caractérisé par plus de deux groupes (26, 27, 28) de sections de rayonnages (14), au moins un transporteur de file d'attente (37, 39) à l'extrémité de sortie de chaque transporteur de sortie (15), et un aiguillage de groupage (16) qui réunit en consignations les articles débités par les transporteurs de files d'attente (37, 39).

19. Dispositif de consignation selon une des revendications 1 à 18, caractérisé en ce qu'il est possible de consigner directement, à partir des sections de rayonnages (14) ou des transporteurs de sortie (15), dans des coquilles d'expédition ou dans des cartons d'expédition.

20. Dispositif de consignation selon une des revendications 1 à 19, caractérisé en ce qu'un carton d'expédition associé à une consignation peut être amené, sous la commande d'un ordinateur, au transporteur de sortie (15), le cas échéant à un aiguillage de groupage (16) pour plusieurs transporteurs de sortie (15).

21. Dispositif de consignation selon une des revendications 1 à 20, caractérisé en ce que l'ordinateur (2) commande à partir de données (a) d'entrée des marchandises, de données (d) d'ordres des clients associées aux consignations, et aux grandeurs du flux d'articles, l'amenée d'articles, leur répartition sur les sections de rayonnages (14) et leur évacuation en consignations (données de commande d).

22. Dispositif de consignation selon la revendication 21, caractérisé en ce que l'ordinateur (2) provoque en outre l'émission d'ordres clients complémentaires (c).
